**Europäisches Patentamt**

**European Patent Office**

**Office européen des brevets**

(19)

(11) Publication number: **0 290 040**
**B1**

(12) # EUROPEAN PATENT SPECIFICATION

(45) Date of publication of the patent specification:
**10.10.90**

(51) Int. Cl.⁵: **E01C 19/20, B60B 33/02**

(21) Application number: **88107325.8**

(22) Date of filing: **06.05.88**

(54) A castor for a spreading apparatus.

(30) Priority: **08.05.87 NL 8701095**

(43) Date of publication of application:
**09.11.88 Bulletin 88/45**

(45) Publication of the grant of the patent:
**10.10.90 Bulletin 90/41**

(84) Designated Contracting States:
**BE CH DE FR GB LI NL**

(56) References cited:
**WO-A-86/06120**
**CH-A- 453 410**
**DE-A- 1 805 607**
**DE-A- 3 500 904**
**FR-A- 2 350 972**
**NL-A- 8 201 464**
**US-A- 3 075 233**
**US-A- 3 817 548**

(73) Proprietor: **Nido Universal Machines B.V.,**
**Industriestraat 7, NL-7451 BA Holten(NL)**

(72) Inventor: **Jansen, Johan, Zweerssteeg 2, NL-7451 NW**
**Holten(NL)**

(74) Representative: **Prins, Hendrik Willem et al,**
**Octrooibureau Arnold & Siedsma Sweelinckplein, 1,**
**NL-2517 GK The Hague(NL)**

## Description

The invention relates to a spreading apparatus to be placed on a vehicle, for the scattering of spreadable material such as salt, consisting of a frame, a supply holder for spreadable material supported by the frame, transport means which convey the spreadable material from the supply holder to a spreading means which is connected to the frame and is drivable by a driving means comprising a castor and a drive gear driven by the castor, the castor being fastened to a wheel frame which can swivel on a vertical axis around a frame beam by means of bearing means.

A spreading apparatus of the kind is known.

Originally the castor was fastened rigidly to the spreading apparatus, so that during the rounding of a bend the castor was dragged slipping through the bend, so that the driving means could not be optimally driven by the castor.

Known from Swiss patent 453.410 is a spreading apparatus in which the castor is arranged for free swivelling around the vertical axis. The construction of this castor is complex and prone to malfunction.

The present invention has for its object to improve the spreading apparatus of the kind stated in the preamble in such manner that the castor optimally drives the driving means, while the construction is inexpensive and less prone to malfunction.

This is achieved according to the invention through bounding means which limit the angle of rotation of the castor around the vertical axis to a maximum of 360°, measured relative to the longitudinal plane of the spreading apparatus.

According to a first embodiment, the bounding means comprise a wheel carriage with which the castor is slidably guided in the wheel frame such that the castor axle is displaceable through the vertical axis. When the direction of travel changes, the castor will then swivel further or swivel back through a maximum of 180° because the consequence of the change of travel direction is in the first instance a sliding of the wheel carriage with respect to the vertical axis, whereby the castor axle is displace to a position past this vertical axis and a swivelling in a direction opposed to the preceding swivelling direction thus takes place.

According to a second embodiment, the bounding means comprise a projection fastened to the frame beam and, cooperating therewith, a stop fastened to the wheel frame. If the projection is hereby fastened rigidly in the longitudinal plane or a plane parallel thereto to the frame beam, the wheel is held some 1-5° outside the longitudinal plane, so that on a change of travel direction only a swivelling back is possible.

If, however, the bounding means comprise spring means which permit counter to the spring action a more than 360° swivelling movement, a continued swivelling in the same sense is impossible, since on a change of the vehicle travel direction the spring means first cause an opposing swivelling motion towards a lesser angular displacement, whereafter on further motion of the spreading apparatus the swivelling back automatically takes place.

In the case of the spring means, it is advantageous if the spring means comprise spring blocks constraining the bounding means in a spring holder.

If in preference the spring means bear against the projection, the projection and the stop operate only when the vehicle travels backwards, which only takes place for short periods.

For an optimal functioning of the castor, it is necessary to damp the swivelling or weaving of the castor. To that end the spreading apparatus is further equipped with damping means which damp a swivelling of the castor.

In a preferred embodiment, the damping means comprise a flowing medium with which the castor tyre is partly filled. On a sudden swiveling movement the fluid, which reacts slowly to this swivelling motion, will exert a damping effect as a result of its inertia.

Stated and other characteristics will be further elucidated in the light of a number of embodiments of the spreading apparatus according to the invention, reference being made thereby to the annexed drawing, in which:

Figure 1 shows a detail of a spreading apparatus according to the state of the art;

Figure 2 shows a partly broken away perspective view of a larger scale of detail II from figure 1 of the castor according to the invention;

Figure 3 shows a section along line III-III from figure 2;

Figures 4 and 5 respectively show a perspective view, corresponding in each case to figure 2, of two other embodiments;

Figures 6 and 7 show variants of the damping means for use with the castors according to the invention; and

Figure 8 shows a cross section through a castor according to the invention provided with yet another damping means.

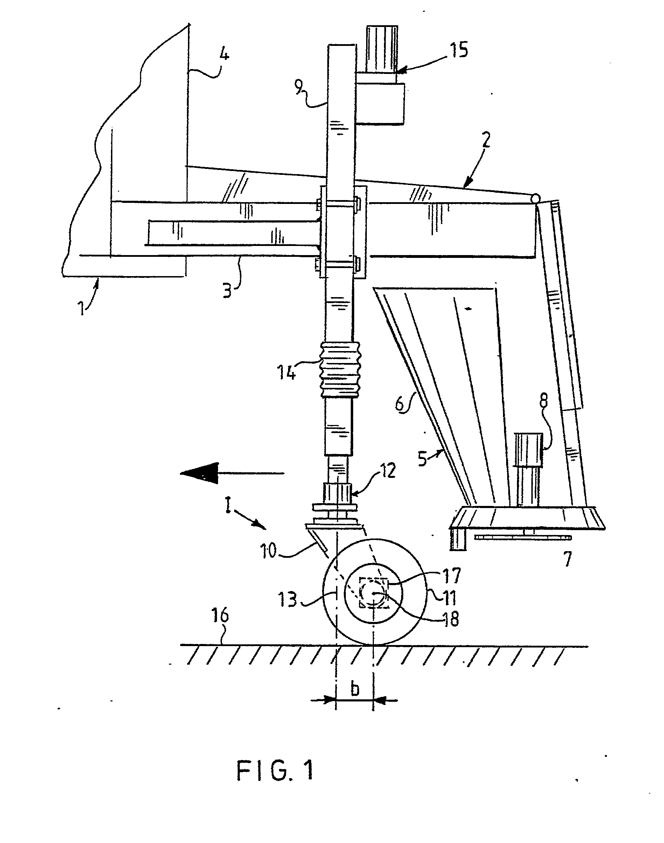

Figure 1 shows, placed on a vehicle 1, a spreading apparatus 2 for the scattering of spreadable material such as salt. The spreading apparatus 2 comprises a frame 3, and a supply holder 4 for the spreadable material supported by the frame 3. Using transporting means (not shown), the spreadable material is conveyed from the supply holder 4 to a spreader member 5 joined to the frame. Spreader member 5 comprises a guiding funnel 6 which deposits the spreadable material onto a disc 7 which is rotatably driven by a hydromotor 8. Spreadable material which falls onto the rotating disc is flung sideways away from the vehicle 1. Mounted on the frame 3 is a frame beam 9 which is adjustable in height and which is provided at its lower end with a castor 11 attached to a wheel frame 10. The wheel frame can be swivelled using bearing means 12 around the frame beam 9 on a vertical axis 13.

Using known spring means 14 and a hydro-pneumatic unit 15, the castor 11 is elastically pressed against the road 16 with a certain pressure.

The spreading apparatus 2 further comprises drive means (shown in part only), namely a hydromotor 17 which is drivably coupled to the castor 11. The hydromotor 17 is incorporated in a hydro-pneumatic system such that the transport means and the hydromotor 8 of the disc 7 are driven dependently on the speed of revolution of the wheel 11.

In figure 1 the wheel axle 18 is situated at a distance b from the axis 13, so that on a change of the vehicle travel direction, specifically forwards or backwards, wheel 11 will swivel around the axis 13. It is this swivelling which is restricted to 360° by the bounding means 19 according to the invention.

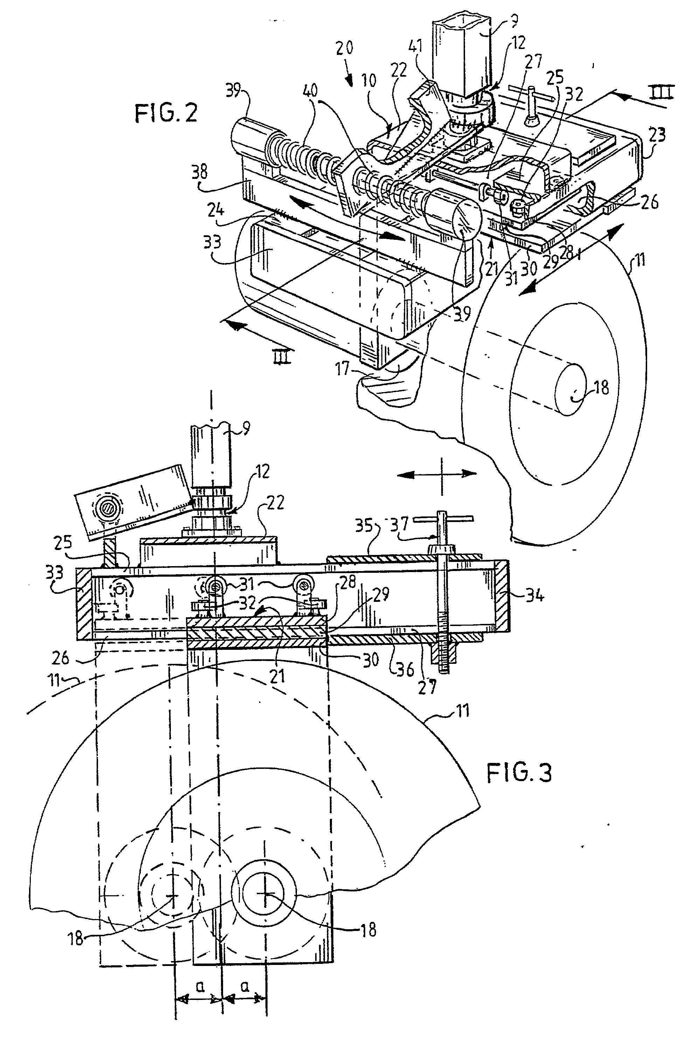

Figures 2 and 3 show a spreading apparatus 20 according to the invention which is equipped with the bounding means 19 according to the invention. Bounding means 19 comprise a wheel carriage, with which the castor 11 is slidably guided on the wheel frame 10.

The wheel frame 10 comprises a bracket-shaped support 22 on which the frame beam 9 rests with the interpositioning of bearing means 12. The support 22 is firmly welded to two U-section bars 23 and 24, which are arranged with their legs 25 and 26 mutually facing each other, leaving a gap 27 free between them, through which the wheel carriage 21 passes. The wheel carriage 21 is H-shaped in cross section and consists of three plates 28-30 mounted together. The leg 26 of the U-section bars 23 and 24 is enclosed between plates 28 and 30.

Arranged on the plate 28 are freely rotatable rollers 31 and 32, whereby the carriage 21 is guided respectively vertically and horizontally in wheel frame 10.

The carriage 21 is thus displaceably guided and dependent on the travel direction of the vehicle 1 in the position in figure 3 indicated by solid lines or broken lines. The displacement is on the one hand restricted by one of the end plates 33, 34 which are welded in position on the U-profiles 23 and 24, and on the other hand by adjuster plates 35 and 36 which are guided along the slot 27 and can be locked onto the legs 25 and 26 using a clamping member 37.

Also arranged on the wheel frame 10 are two spiral springs 40 which are collinearly disposed and accommodated in spring housings 39 mounted facing each other on a strip 38. Projecting to a position between the springs 40 is a metal strip 41 which is rigidly joined to the frame beam 9. On a swivelling of the castor 11 with respect to the frame beam 9, one of the two springs 40 is compressed and the swivelling motion is counteracted. In this way a pivoting or weaving of the castor 11 is counteracted with the aid of the springs 40.

In the spreading apparatus 42 according to the invention, the bounding means 19 comprise a projection 43, rigidly fastened to the frame beam 9, which co-operates with a stop 45 standing up from a frame plate 44. Projection 43 and stop 45 are fastened with respect to each other to frame beam 9 and wheel frame 10 respectively such that during backwards travel of the vehicle the castor 11 can not come to rest in the same line as the vehicle wheels. The angle formed by the castor 11 is preferably about 1-5°. This has the consequence that on reversal of the direction of travel the wheel 11 will swivel back.

The wheel frame 10 is further provided with an eccentric 46, mounted eccentrically with respect to the axis 13, to which is coupled a hydraulic shock absorber 47, whose other end is connected to the spreading apparatus 2. Shock absorber 47 damps the undesired lateral movement of the castor 11.

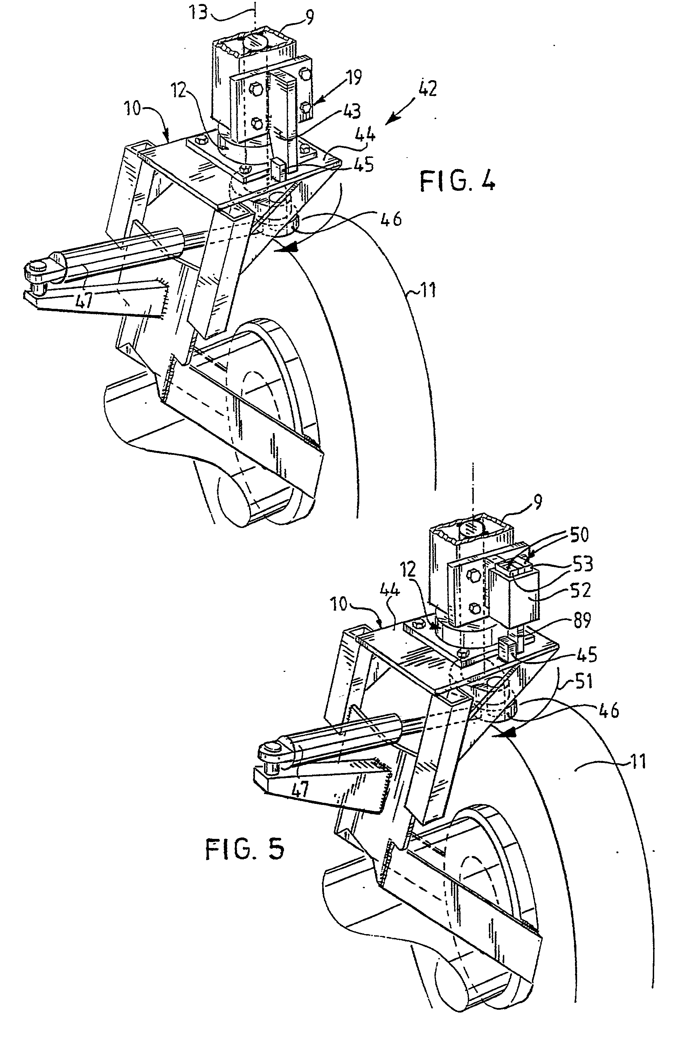

In comparison to figure 4, the projection 89 in the spreading apparatus 48 according to figure 5 is mounted not rigidly, but elastically in a vertical plane, on the frame beam 9. The spring means 50, which counteract a swivelling movement greater than 360° in the direction of the arrow 51, comprise elastic blocks 53 enclosing the projection 89 in a spring holder 52. In this manner it is possible during, for example, backwards movement of vehicle 1 for the stop 45 to be swivelled through 360° into a position in line with the vehicle wheels, since in the last 5-1° the projection compresses the elastic blocks 53. When the vehicle stops, the elastic blocks push the stop 45 and thereby the castor 11 out of line with the vehicle wheels, and on a reversing of the vehicle driving direction the castor swivels in the opposite direction. Since the castor 11 can be swivelled through 360° in its extreme position, a friction between wheel 11 and road 16 is substantially prevented, so that an excessive wear is avoided.

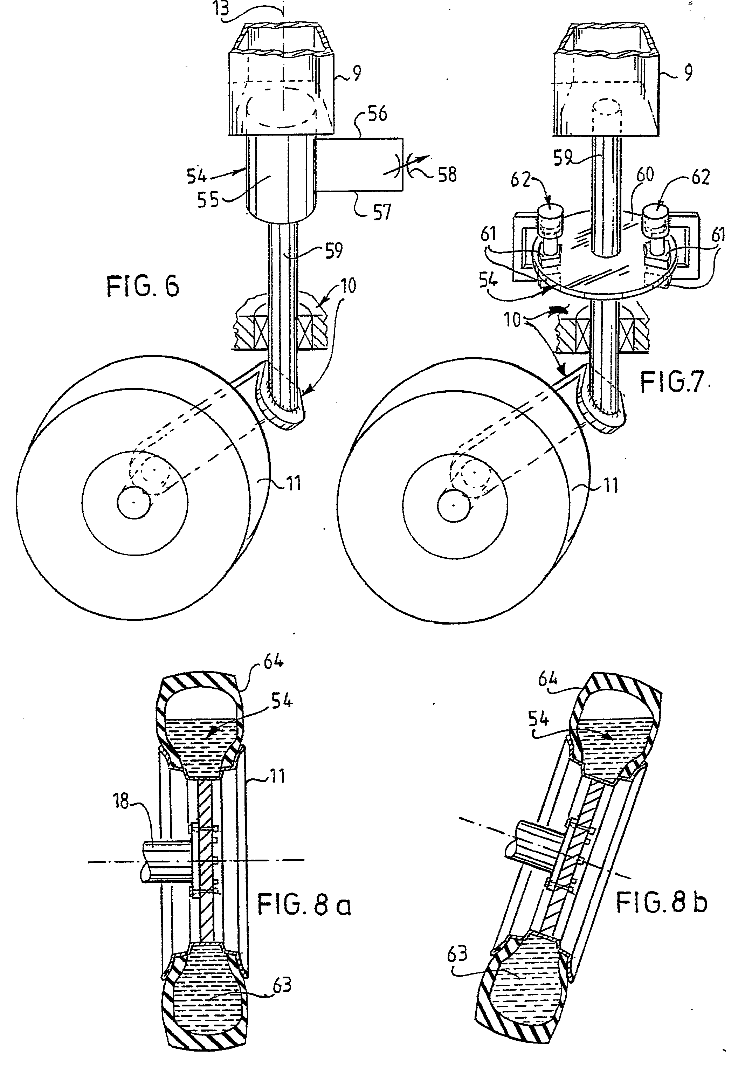

Finally, figures 6-8 show various embodiments of damping means which damp the swivelling around the axis 13 and of which examples have already been shown in figures 2 and 3 (springs 40) and in figures 4 and 5 (hydraulic shock absorber 47).

In figure 6 the damping means 54 consist of a hydromotor 55 whose suction line 56 is short-circuited to the pressure line 57 through a throttle 58. The hydromotor 55 is arranged at the lower end of frame beam 9 and its motor shaft 59 is collinear with axis 13.

In figure 7 the damping means 54 consist of a brake disc 60 arranged on the axle 59 and upon which brake blocks 61 operate with adjustable spring means 62.

In the embodiment according to figure 8 the damping means 54 comprise a running fluid 63, with which the castor tyre 64 is only partially filled.

## Claims

1. Spreading apparatus (20) to be placed on a vehicle, for the disseminating of spreadable material such as salt, consisting of a frame, a supply holder for spreadable material supported by said frame, transport means which convey the spreadable material from said supply holder to a spreading means which is connected to said frame and is drivable by a driving means comprising a castor (11) and a drive gear driven by said castor; said castor being fastened to a wheel frame (10) which can swivel on a vertical axis (13) around a frame beam (9) by means of bearing means (12), **characterized by** bounding means (19) which limit the angle of rotation of said castor (11) around said vertical axis (13) to a maximum of 360°, measured relative to the longitudinal plane of the spreading apparatus.

2. Spreading apparatus as claimed in claim 1, **characterized in that** the bounding means comprise a wheel carriage (21) with which the castor (11) is slidably guided on the wheel frame (10) such that the castor axle is displaceable through the vertical axis.

3. Spreading apparatus as claimed in claim 2, **characterized in that** a distance a through which the wheel carriage (21) is displaceable is adjustable with adjustment means (35–37).

4. Spreading apparatus as claimed in claim 1, **characterized in that** the bounding means comprise a projection (43) fastened to the frame beam (9) and, cooperating therewith, a stop (45) fastened to the wheel frame (10).

5. Spreading apparatus as claimed in claim 4, **characterized in that** the projection (43) is fastened rigidly in the longitudinal plane or a plane parallel thereto to the frame beam (9).

6. Spreading apparatus as claimed in claim 4, **characterized in that** the bounding means (50) comprise spring means which permit a more than 360° swivelling movement counter to the spring action.

7. Spreading apparatus as claimed in claim 6, **characterized in that** the spring means (50) comprise spring blocks (53) constraining the bounding means in a spring holder (52).

8. Spreading apparatus as claimed in claim 6 or 7, **characterized in that** the spring means bear against the projection (89).

9. Spreading apparatus as claimed in claims 4-8, **characterized in that** the projection (89) strikes against the stop when the vehicle travels backwards.

10. Spreading apparatus as claimed in any of the preceding claims, **characterized by** damping means (54) which damp the swivelling of the castor.

11. Spreading apparatus as claimed in claim 10, **characterized in that** the damping means comprise a flowing medium (63) with which the castor tyre (64) is partially filled.

## Patentansprüche

1. Streugerät (20) zur Anbringung an einem Fahrzeug für das Ausstreuen von Streumaterial, wie z.B. Salz, bestehend aus einem Rahmen, einem von dem Rahmen getragenen Versorgungsbehälter für Streumaterial, einer Transporteinrichtung, die das Streumaterial vom Versorgungsbehälter zu einer Streueinrichtung fördert, die mit dem Rahmen verbunden ist und mittels einer Antriebseinrichtung antreibbar ist, umfassend eine Lenkrolle (11) und ein von der Lenkrolle angetriebenes Antriebsgetriebe, wobei die Lenkrolle an einem Radgestell (10) befestigt ist, welches sich um eine vertikale Achse (13) mittels einer Lageranordnung (12) um einen Rahmenträger (9) drehen kann, gekennzeichnet durch Begrenzungsmittel, die den Rotationswinkel der Lenkrolle (11) um die vertikale Achse (13) auf ein Maximum von 360°, relativ zur Längsebene des Streugeräts gemessen, beschränken.

2. Streugerät gemäß Anspruch 1, dadurch gekennzeichnet, daß die Begrenzungsmittel einen Radschlitten (21) umfassen, mit dem die Lenkrolle (11) an dem Radgestell (10) verschiebbar geführt ist, wodurch die Lenkrollenachse durch die vertikale Achse hindurch verschiebbar ist.

3. Streugerät gemäß Anspruch 1, dadurch gekennzeichnet, daß eine Strecke (a), um die der Radschlitten (21) verschiebbar ist, mit Stelleinrichtungen (35 bis 37) einstellbar ist.

4. Streugerät gemäß Anspruch 1, dadurch gekennzeichnet, daß die Begrenzungsmittel einen an einem Rahmenträger (9) befestigten Vorsprung (43), und damit zusammenwirkend einen am Radgestell (10) befestigten Anschlag (45) aufweisen.

5. Streugerät gemäß Anspruch 4, dadurch gekennzeichnet, daß der Vorsprung (43) starr in der Längsebene oder einer dazu parallelen Ebene an einem Rahmenträger (9) befestigt ist.

6. Streugerät gemäß Anspruch 4, dadurch gekennzeichnet, daß die Begrenzungsmittel Federelemente (50) umfassen, die eine mehr als 360° drehende Bewegung entgegen dem Federmechanismus gestattet.

7. Streugerät gemäß Anspruch 6, dadurch gekennzeichnet, daß die Federelemente (50) Federblöcke (53) umfassen, die die Begrenzungsmittel in einem Federbehälter (52) einzwängen.

8. Streugerät gemäß den Ansprüchen 6 oder 7, dadurch gekennzeichnet, daß die Federelemente gegen den Vorsprung (89) anliegen.

9. Streugerät gemäß den Ansprüchen 4 bis 8, dadurch gekennzeichnet, daß der Vorsprung (89) gegen den Anschlag stößt, wenn das Fahrzeug rückwärts fährt.

10. Streugerät gemäß den vorherigen Ansprüchen, gekennzeichnet durch ein Dämpfungselement (54), das das Schwenken der Lenkrolle dämpft.

11. Streugerät gemäß Anspruch 10, dadurch gekennzeichnet, daß das Dämpfungselement ein Fließmedium (63) umfaßt, mit dem der Lenkrollenreifen (64) teilweise gefüllt ist.

## Revendications

1. Epandeuse (20) destinée à être placée sur un véhicule, pour épandre un produit d'épandage tel que du sel, composée d'un châssis, d'un conteneur pour le produit d'épandage supporté par le châssis, de moyens de transport qui acheminent le produit d'épandage depuis le conteneur jusqu'à un moyen d'épandage qui est relié au châssis et est entraîné par un moyen d'entraînement comportant une roue à pivot (11) et un engrenage planétaire entraîné par la roue à pivot, cette dernière étant fixée à un cadre de la roue (10) qui peut pivoter sur un axe vertical (13) autour d'une poutre à arcade (9) grâce à des moyens formant paliers (12), caractérisée par des moyens de limitation (19) servant à limiter l'angle de rotation de ladite roue à pivot (11) autour dudit axe vertical (13) jusqu'à un maximum de 360°, mesuré relativement au plan longitudinal de l'épandeuse.

2. Epandeuse selon la revendication 1, caractérisée en ce que les moyens de limitation comportent un support de roue (21) avec lequel la roue à pivot (11) est guidée de manière coulissante sur le cadre de roue (10) de sorte que l'essieu de la roue à pivot est déplaçable selon l'axe vertical.

3. Epandeuse selon la revendication 2, caractérisée en ce qu'une distance à sur laquelle peut se déplacer le support de roue (21) est réglable par des moyens de réglage (35–37).

4. Epandeuse selon la revendication 1, caractérisée en ce que les moyens de limitation comportent une avancée (43) fixée à la poutre à arcade (9) et une butée (45), coopérant avec celle-ci, fixée au support de roue (10).

5. Epandeuse selon la revendication 4, caractérisée en ce que l'avancée (43) est fixée rigidement, dans le plan longitudinal ou dans un plan parallèle à celui-ci, à la poutre à arcade (9).

6. Epandeuse selon la revendication 4, caractérisée en ce que les moyens de limitation comportent des moyens formant ressort (50) qui permettent un mouvement de pivotement supérieur à 360° pour contrer l'action de ressort.

7. Epandeuse selon la revendication 6, caractérisée en ce que les moyens formant ressort (50) comportent des blocs élastiques (53) comprimant le moyen de limitation dans une cage de ressort (52).

8. Epandeuse selon la revendication 6 ou 7, caractérisée en ce que les moyens formant ressort appuient contre l'avancée (89).

9. Epandeuse selon l'une des revendications 4 à 8, caractérisée en ce que l'avancée (89) heurte la butée lorsque la véhicule recule.

10. Epandeuse selon l'une des revendications précédentes, caractérisée par des moyens d'amortissement (54) qui amortissement le pivotement de la roue à pivot.

11. Epandeuse selon la revendication 10, caractérisée en ce que les moyens d'amortissement comportent un milieu fluide (63) remplissant partiellement le pneu de la roue à pivot (64).

FIG. 1

FIG.2

FIG.3

FIG. 4

FIG. 5

FIG. 6

FIG.7

FIG. 8 a

FIG.8 b